# EUROPÄISCHE PATENTSCHRIFT

(11) **EP 2 277 234 B1**
(45) Veröffentlichungstag und Bekanntmachung des Hinweises auf die Patenterteilung: **13.01.2016**
(21) Anmeldenummer: 09749533.7
(22) Anmeldetag: 29.04.2009
(51) Int. Cl.: H01Q 1/22, H01Q 9/26, H01Q 9/28, G06K 19/077

(54) **ANTENNENANORDNUNG FÜR DIE CHIPKARTENHERSTELLUNG**
ANTENNA FOR CHIP CARD PRODUCTION
DISPOSITIF ANTENNE POUR LA FABRICATION DE CARTES À PUCE

(30) Priorität: 23.05.2008 DE 102008024825
(43) Veröffentlichungstag der Anmeldung: 26.01.2011
(73) Patentinhaber: Smartrac IP B.V., 1077 XX Amsterdam (NL)
(72) Erfinder: RIETZLER, Manfred, 87616 Marktoberdorf (DE); FREEMAN, Raymond, Mesa AZ 85213 (US)
(74) Vertreter: von den Steinen, Axel
(86) Internationale Anmeldenummer: PCT/EP2009/003099
(87) Internationale Veröffentlichungsnummer: WO 2009/141043

(56) Entgegenhaltungen:
- DE-A1-102005 058 101
- DE-A1-102006 052 517
- DE-A1-102006 054 078
- DE-U1- 20 105 170
- US-A1- 2006 158 380
- US-A1- 2007 052 613
- US-A1- 2007 164 414
- Finkenzeller, Klaus: "RFID-Handbuch : Grundlagen und praktische Anwendungen induktiver Funkanlagen, Transponder und kontaktloser Chipkarten" 1998, Hanser , München , XP002541372 ISBN: 3-446-19376-6 Kapitel 12.4 (Seiten 210-214)

## Beschreibung

Die vorliegende Erfindung betrifft eine Antennenanordnung für die Chipkartenherstellung von insbesondere im UHF-Frequenzbereich eingesetzten Chipkarten mit einem Substrat und einer Mehrzahl in einem Beschichtungsverfahren auf dem Substrat ausgebildeten Antennenleiterstrukturen mit einer Anschlussanordnung zum Anschluss der Antennenleiterstrukturen an einen Chip.

Antennenanordnungen der eingangsgenannten Art werden insbesondere in der Ausführung der Antennenleiterstruktur als Dipolanordnung bei Transpondern eingesetzt, die im UHF-Frequenzbereich betrieben werden. Wegen der Ausbildung der Antennenleiterstrukturen in einem Beschichtungsverfahren weisen die Antennenanordnungen der eingangs genannten Art bei entsprechend flexibler Gestaltung des Antennensubstrats, das etwa auch durch eine Folie ausgebildet sein kann, auch eine besondere Eignung zur Herstellung sogenannter "tags" auf, die häufig zur Produktkennzeichnung eingesetzt werden und auf die Oberfläche des zu kennzeichnenden Produkts flächig aufgebracht werden.

Unabhängig von der Ausführungsform des Transponders, bei dem die in einem Beschichtungsverfahren hergestellte Antennenleiterstruktur eingesetzt wird, geht man bei der Herstellung der Transponder, also beispielsweise der Chipkarten oder Tags, bislang so vor, dass zur Herstellung einer Vielzahl von Transpondern die Antennenleiterstrukturen in einer Reihenanordnung auf einem als endloses Substrat ausgebildeten Trägerband angeordnet sind. Bei der Herstellung der Transponder wird das zu einer Vorratsrolle aufgerollte Trägerband kontinuierlich abgespult und die Antennenleiterstrukturen werden durch Abschneiden von Substrat-Teilstücken von der Vorratsrolle vereinzelt.

Anschließend erfolgt die Kontaktierung der auf den vereinzelten Antennensubstraten angeordneten Antennenleiterstrukturen mit einem Chipmodul sowie die Aufbringung von das Antennensubstrat beidseitig abdeckenden Decklagen zur Herstellung der Chipkarte bzw. des Tags.

Bei dem bekannten Verfahren ist somit zur Herstellung des Transponders, also etwa der Chipkarte oder des Tags, eine Handhabung der aus der Vorratsrolle vereinzelten Antennensubstrate notwendig. Diese Handhabung der vereinzelten Antennensubstrate ist insbesondere dann aufwendig, wenn nachfolgend der Vereinzelung zur Vorbereitung eines Laminiervorgangs die vereinzelten Antennensubstrate auf Decklagen aufgebracht werden, die in einem Nutzenverbund miteinander zusammenhängend ausgebildet sind, da für jede Decklage im Nutzenverbund das zugeordnete Antennensubstrat unterschiedlich zu positionieren ist.

Entsprechende Verfahren und Antennenanordnungen sind beispielsweise aus den Druckschriften DE 201 05 170 U1, DE 10 2005 058101 A1 und DE 10 2006 052517 A1 bekannt, sowie aus dem "RFID Handbuch" von Klaus Finkenzeller, Kapitel 12.4, Hanser Verlag, München, ISBN 3-446-19376-6.

Der vorliegenden Erfindung liegt daher die Aufgabe zugrunde, eine Antennenanordnung vorzuschlagen, die eine vereinfachte Herstellung von Transpondern in einem Laminierungsverfahren ermöglicht.

Zur Lösung dieser Aufgabe weist die erfindungsgemäße Antennenanordnung die Merkmale des Anspruchs 1 auf.

Bei der erfindungsgemäßen Anordnung ist das Substrat als Substratbogen ausgebildet und die Antennenleiterstrukturen befinden sich in einer eine Mehrzahl von Spalten und Reihen aufweisenden Matrixanordnung auf dem Substratbogen, so dass eine gleichzeitige Positionierung einer Mehrzahl von in einer Matrixanordnung angeordneten Antennenleiterstrukturen auf einem Decklagensubstrat mit in einem Matrixverbund angeordneten Decklagen erfolgen kann.

Aufgrund der erfindungsgemäß ausgebildeten Antennenanordnung kann somit darauf verzichtet werden, jedes vereinzelte Antennensubstrat zur deckungsgleichen Anordnung mit einer zugeordneten Decklage einzeln zu positionieren. Vielmehr ist es ausreichend, eine deckungsgleiche Anordnung der in einer Matrixanordnung angeordneten Antennenleiterstrukturen mit den in einer entsprechenden Matrixanordnung angeordneten Decklagen in einem einzigen Positionierungsvorgang herzustellen. Wenn die Decklagen, die zur isolierenden Abdeckung der Antennenleiterstruktur auf dem Antennensubstrat dienen, mit einem Chip versehen sind oder etwa insgesamt als Chipmodul ausgebildet sind, bei dem die Decklage als Trägersubstrat für den Chip dient, kann gleichzeitig mit der Anordnung der Mehrzahl von Antennenleiterstrukturen auf dem Decklagenverbund eine positionierende Ausrichtung der Anschlussanordnung der Antennenleiterstruktur mit den Anschlussflächen des Chips zur nachfolgenden Kontaktierung des Chips mit der Antennenleiterstruktur erfolgen.

Als besonders vorteilhaft erweist sich die Antennenanordnung, wenn die Antennenleiterstruktur zumindest eine Dipolanordnung aufweist, da somit die Herstellung von UHF-Transpondern im Laminationsverfahren möglich ist, ohne dass eine Handhabung der vereinzelten Antennensubstrate notwendig wäre. Insbesondere bei einer asymmetrischen Ausbildung der Dipolanordnung erweist sich eine Handhabung der im Verbund zusammenhängend auf dem Antennensubstrat angeordneten Antennenleiterstrukturen wegen der infolge der Asymmetrie ungünstigen Schwerpunktverteilung als einfacher als die Handhabung vereinzelter Antennenleiterstrukturen.

Wenn die Dipolanordnung aus einem Drahtleiter gebildet ist, ist die Herstellung der Dipolanordnung durch Verlegung eines Drahtleiters auf der Oberfläche des Substratbogens möglich.

Die Antennenanordnung weist in einer bevorzugten Ausführungsform die Ausbildung einer Dipolanordnung auf, die einen ersten Antennenstrang und einen zweiten Antennenstrang aufweist, die sich jeweils längs einer Spaltentrennlinie und einer Reihentrennlinie zur Vereinzelung der Antennenleiterstrukturen erstrecken und in einem Kreuzungsbereich der Trennlinien über einen Koppelleiterabschnitt miteinander verbunden sind. Derartig ausgebildete Antennenleiterstrukturen ermöglichen eine optimierte Anordnung in einen Randbereich des Antennensubstrats, die die Wahrscheinlichkeit, dass bei einem manuellen Zugriff auf einen als Chipkarte ausgebildeten Transponder Teile der Dipolanordnung der Antennenleiterstruktur durch den Griff mit der Hand abgedeckt werden, erheblich reduziert.

Dadurch, dass die Antennenleiterstruktur außerhalb eines "Grifffeldes" in einem Seitenrandbereich des Substrats angeordnet ist, kann von zumindest einem Seitenrand der Chipkarte her die Karte normal ergriffen werden, also mit einer Anordnung des Daumens und zumindest eines Fingers im Zentrumsbereich der Karte, ohne dass eine Verstimmung der Antenne die zwangsläufige Folge ist. Die Antennenanordnung in der bevorzugten Ausführungsform ermöglicht durch die Anordnung der extrem asymmetrischen bzw. außermittigen Antennenleiterstrukturen in einem gemeinsamen Matrixverbund die problemlose Handhabung der Antennenleiterstrukturen bei der Herstellung der Chipkarten in einem Laminationsverfahren.

Wenn gemäß einer besonders vorteilhaften Ausführungsform der Antennenanordnung die Anschlussanordnungen zum Anschluss der Antennenleiterstrukturen an den Chip als Schleifendipol ausgebildet sind, mit einem Koppelleiterabschnitt, der parallel zu dem Koppelleiterabschnitt der zugeordneten Antennenleiterstruktur angeordnet ist, ist es möglich, die Anschlussanordnungen bzw. den mit der Anschlussanordnung kontaktierten Chip seitlich zu den Antennensträngen der Antennenleiterstruktur anzuordnen, so dass vermittels der Antennenanordnung Chipkarten herstellbar sind, mit einer Antennenleiterstruktur, deren Antennenstränge quasi bis an den Seitenrand des Antennensubstrats verlegt werden können, um Chipkarten zu ermöglichen mit einem extrem großen Grifffeld.

Wenn bei der Antennenanordnung die Anschlussanordnungen zumindest zwei flächig ausgebildete Anschlusskontakte aufweisen, die sich über zu einer Substratrückseite hin offenen Substratausnehmung erstrecken, kann die unmittelbare Kontaktierung der Antennenleiterstruktur mit einem auf der Rückseite des Antennensubstrats, also auf der Gegenseite zur Antennenleiterstruktur angeordneten Bauelement, beispielsweise einem Chip, ohne weitere Umkontaktierung oder Umverdrahtung erfolgen. Die in einem Beschichtungsverfahren auf die Vorderseite des Antennensubstrats aufgebrachte Anschlussanordnung überspannt quasi die von der Rückseite des Antennensubstrats frei zugänglichen Substratausnehmungen, so dass eine unmittelbare Kontaktierung der Anschlusskontaktrückseiten erfolgen kann.

Diese, die Substratsausnehmungen überspannende Anordnung kann beispielsweise dadurch erzeugt werden, dass vor Aufbringung der Antennenleiterstruktur bzw. der Anschlussanordnung auf dem Antennensubstrat in das Antennensubstrat eingebrachte Ausnehmungen während der Beschichtung des Antennensubstrats mit dem Antennenmaterial temporär verfüllt sind.

Wenn die Anschlusskontakte einstückig mit dem Koppelleiterabschnitt der Anschlussanordnung als Materialbeschichtung in einem Beschichtungsverfahren auf das Kartensubstrat aufgebracht sind, ergibt sich trotz der die Substratausnehmungen überspannenden Anordnung der Anschlusskontakte eine ausreichende mechanische Stabilität.

Überhaupt erweist es sich als vorteilhaft, wenn die Antennenleiterstruktur und die darin ausgebildete Anschlussanordnung aus einer übereinstimmenden Materialbeschichtung gebildet sind, da somit die gesamte Antennenleiterstruktur in einem einzigen Beschichtungsvorgang herstellbar ist.

Wenn die Anschlussanordnung aus Aluminium oder einer Aluminium enthaltenden Legierung gebildet ist, kann insbesondere in dem Fall, dass der zur Kontaktierung mit der Anschlussanordnung vorgesehene Chip ebenfalls Anschlusskontakte aus Aluminium oder einer Aluminium enthaltenden Legierung aufweist, eine unmittelbare Kontaktierung der Chipanschlussflächen mit den Anschlusskontakten der Anschlussanordnung in einem Ultraschallschweißverfahren durchgeführt werden.

Wenn die Anschlussanordnung aus Kupfer oder einer Kupfer enthaltenden Legierung gebildet ist, ist eine Kontaktierung mit einem Chip vermittels eines der üblichen thermischen Bondverfahren möglich.

Als besonders vorteilhaft erweist es sich, die Antennenanordnung als Laminatverbund mit zwei Substratbögen aufzubauen, die jeweils die Anschlussanordnungen bzw. die Dipolanordnungen aufweisen. Somit ist eine Variabilität in der örtlichen Zuordnung der Anschlussanordnungen und Dipolanordnungen in der Ebene der Substratbögen möglich, die es erlaubt, den Abstand zwischen den Anschlussanordnungen und den Dipolanordnungen zur Frequenzabstimmung der Antennenleiterstrukturen einzustellen.

Ebenso ist es möglich, die örtliche Zuordnung der Dipolanordnung zu benachbarten Laminatlagen im Laminataufbau einer Chipkarte zu ändern, um die Dipolanordnungen in ausgewählte Bereiche der Chipkarte zu verlegen, um beispielsweise zur Vermeidung eines "detuning" die Dipolanordnung außerhalb eines "Grifffeldes" vorzusehen.

Nachfolgend wird eine bevorzugte Ausführungsform der Antennenanordnung anhand der Zeichnung näher erläutert.

Es zeigen:
- **Fig. 1**: eine Antennenanordnung mit einer Mehrzahl auf einem Substratbogen in einer Matrixanordnung angeordneter Antennenleiterstrukturen;
- **Fig. 2**: ein aus dem Substratbogen vereinzeltes Antennensubstrat;
- **Fig. 3**: eine Schnittdarstellung einer auf Basis des in **Fig. 2** dargestellten Antennensubstrats hergestellten Chipkarte gemäß Schnittlinienverlauf III-III in **Fig. 2****;**
- **Fig. 4**: eine weitere Chipkarte in einer **Fig. 3** entsprechenden Darstellung;
- **Fig. 5**: ein Antennensubstrat während der Beschichtung mit einem zur Ausbildung der Antennenleiterstruktur auf das Substrat aufgebrachten metallischen Beschichtung;
- **Fig. 6**: eine schematische Darstellung eines Verfahrens zur Herstellung von Chipkarten auf Basis einer auf einem Substratbogen ausgebildeten Antennenanordnung.

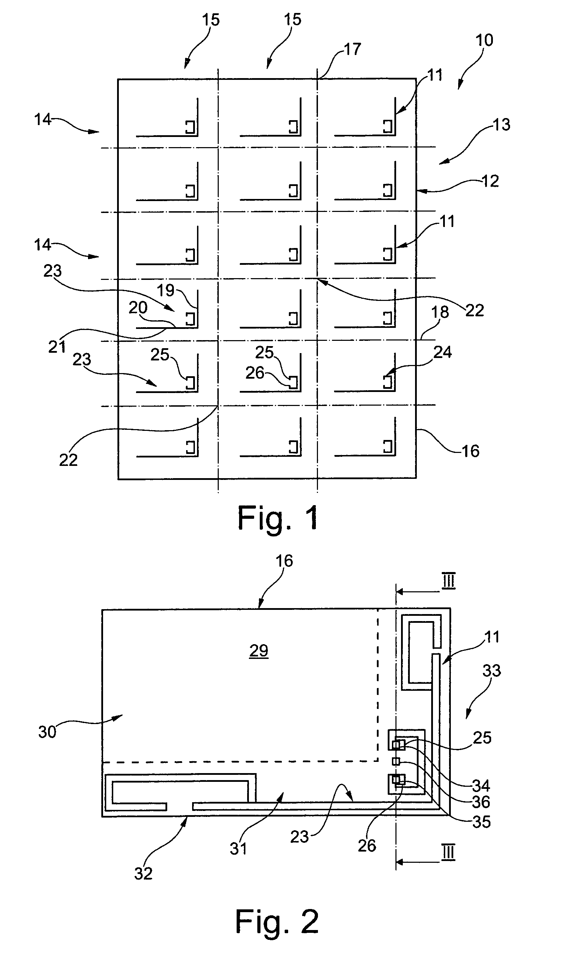

**Fig. 1** zeigt eine Antennenanordnung 10 mit einer Mehrzahl von Antennenleiterstrukturen 11, die auf einem Substratbogen 12 in einer Matrixanordnung 13 angeordnet sind. Die Matrixanordnung 13 umfasst im vorliegenden Fall sechs Reihen 14 und drei Spalten 15. Die in **Fig. 1** dargestellte 6 x 3-Matrixanordnung 13 weist insgesamt achtzehn Antennenleiterstrukturen 11 auf, die jeweils auf einem Antennensubstrat 16 angeordnet sind, derart, dass die Antennensubstrate 16 im Verbund den Substratbogen 12 ausbilden. Die Abmessungen der Antennensubstrate 16 sind durch Spaltentrennlinien 17 und Reihentrennlinien 18 definiert, die Solltrennlinien für eine nachfolgende Vereinzelung der Antennensubstrate 16 aus dem durch den Substratbogen 12 gebildeten Verbund bilden.

Als Material für den Substratbogen 12 wie auch für die im weiteren erwähnten Decklagen oder Chipträger kann beispielsweise, PVC, PETG oder auch ein Polycarbonat verwendet werden.

Die einzelnen Antennenleiterstrukturen 11 weisen jeweils eine Dipolanordnung 23 auf, mit einem sich längs einer Spaltentrennlinie 17 erstreckenden Antennenstrang 19 und einem sich längs einer Reihentrennlinie 18 erstreckenden zweiten Antennenstrang 20. Die Antennenstränge 19, 20 sind über einen Koppelleiterabschnitt 21 miteinander verbunden, der abschnittsweise im Wesentlichen parallel zu der Spaltentrennlinie 17 bzw. der Reihentrennlinie 18 und benachbart einem durch die Spaltentrennlinie 17 und die Reihentrennlinie 18 gebildeten Kreuzungsbereich 22 verläuft. Benachbart dem Koppelabschnitt 21 der Dipolanordnung 23 befindet sich die im vorliegenden Fall als Schleifendipol ausgebildete Anschlussanordnung 24 mit flächig ausgebildeten Anschlusskontakten 25, 26.

Wie aus der Darstellung eines aus dem Substratbogen 12 vereinzelten Antennensubstrats 16 in **Fig. 2** hervorgeht, weisen die Antennenstränge 19, 20 an ihren freien Enden jeweils offene Leiterschleifen bzw. Leiterrahmen 27, 28 auf, die im vorliegenden Fall unterschiedlich groß ausgebildet sind und somit eine den Antennensträngen 19, 20 jeweils zugeordnete Unterschiedliche Frequenzabstimmung der Dipolanordnung 23 ermöglichen.

Das in **Fig.2** dargestellte Antennensubstrat 16 weist eine Substratoberfläche 29 auf, die in ein Grifffeld 30 und ein Transponderfeld 31 unterteilt ist. Dabei ist mit dem Grifffeld 30 der Bereich bezeichnet, in dem bei einem Griff eines Kartenbenutzers auf das Antennensubstrat 16 bzw. die auf Basis des Antennensubstrats ausgebildete Chipkarte eine zumindest teilweise Abdeckung der Substratoberfläche 29 durch Daumen bzw. Finger erfolgen kann, ohne dass hiermit eine Abdeckung der Dipolanordnungs 23 bzw der Antennenleiterstruktur 11, die im Transponderfeld 31 aufgenommen sind, verbunden wäre.

Bei dem in **Fig. 2** dargestellten Antennensubstrat 16 ist das Transponderfeld 31 im Wesentlichen L-förmig ausgebildet und nimmt die Antenennleiterstruktur 11 auf. Aufgrund der L-förmigen Ausbildung des Transponderfeldes 31 erstreckt sich die Antennenleiterstruktur 11 bzw. die Dipolanordnung 23 lediglich unmittelbar benachbart von Seitenrändern 32, 33 des Antennensubstrats 16, so dass eine große Variabilität im Zugriff auf das Antennensubstrat 16 bzw. die daraus gebildete Chipkarte möglich ist, ohne dass es zu einer Überdeckung von Teilen der Dipolanordnung 23 durch Daumen oder Finger der zugreifenden Hand kommt.

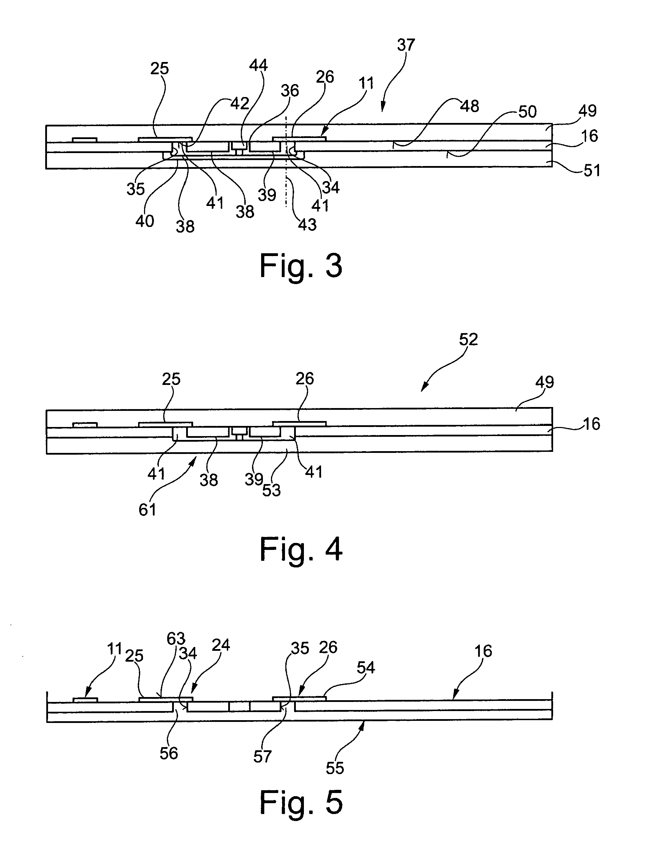

Wie ferner aus der Darstellung gemäß **Fig. 2** deutlich wird, sind in dem Antennensubstrat 16 jeweils unterhalb der Anschlusskontakte 25 und 26 sowie zwischen den Anschlusskontakten 25, 26 Substratausnehmungen 34, 35 und 36 ausgebildet. Wie **Fig. 3** zeigt, dienen die Substratausnehmungen 34, 35 beim Aufbau einer Chipkarte 37 auf Basis des Antennensubstrats 16 zur unmittelbaren Kontaktierung mit Anschlussleitern 38, 39 eines Chipträgers 40. Dabei sind die Anschlussleiter 38, 39 im vorliegenden Fall vermittels auf den Anschlussleitern 38, 39 ausgebildeten Kontakterhöhungen 41 mit einer Kontaktrückseite 42 der Anschlusskontakte 25, 26 unmittelbar, das heißt auf einer geradlinigen Kontaktachse 43, ohne axialen Versatz, wie es bei einer Umverdrahtung der Fall wäre, kontaktiert ist.

Wie ferner aus der **Fig. 3** hervorgeht, dient die zwischen den Anschlusskontakten 25, 26 im Antennensubstrat 16 ausgebildete Substratausnehmung 36 zur Aufnahme eines Chips 44, der über seine Chipkontakte 45, 46 mit den Anschlussleitern 38, 39 kontaktiert ist.

Bei der in **Fig. 3** dargestellten Chipkarte 37 ist zur Kontaktierung zwischen dem Antennensubstrat 16 bzw. der Anschlussanordnung 24 der auf dem Antennensubstrat 16 ausgebildeten Antennenleiterstruktur 11 ein Chipmodul 47 vorgesehen, derart, dass der Chip 44 in der Substratausnehmung 36 zwischen einer Rückseite 48 einer auf die Antennenleiterstruktur 11 aufgebrachten ersten Decklage 49 und dem Chipträger 40 aufgenommen ist. Der Chipträger 40 wird seinerseits zwischen einer Rückseite 50 des Antennensubstrats 16 und einer auf die Rückseite 50 aufgebrachten zweiten Decklage 51 aufgenommen.

**Fig. 4** zeigt eine Chipkarte 52, die insoweit von der in **Fig. 3** dargestellten Chipkarte 37 abweicht, als hier ein Chipmodul 61 verwendet wird, dessen Chipträger 53 eine mit dem Antennensubstrat 16 übereinstimmende Abmessung aufweist und somit gleichzeitig eine Decklage bildet.

**Fig. 5** zeigt ein Antennensubstrat 16 unmittelbar nach Durchführung einer Beschichtung des Antennensubstrats 16 mit einem metallischen Leitermaterial 54 zur Ausbildung der Antennenleiterstruktur 11 bzw. der Anschlussanordnung 24. Bereits vor Durchführung der Beschichtung sind im Antennensubstrat 16 die Substratausnehmungen 34, 35 und 36 vorgesehen, wobei zumindest die Substratausnehmungen 34, 35, die zur nachfolgenden Kontaktierung mit dem Chip 44 dienen, während des Beschichtungsvorgangs verfüllt sind, um ein Eindringen des Leitermaterials 54 in die Substratausnehmungen 34, 35 zu verhindern. Dies kann dadurch geschehen, dass das Antennensubstrat 16 während der Beschichtung auf einem Substratträger 55 angeordnet ist, der mit Fortsätzen 56, 57 versehen ist, die formschlüssig in die Substratausnehmung 34, 35 eingreifen. Die Fortsätze 55, 56 sind zumindest auf ihrer Beschichtungsfläche 58 mit einer Antihaftbeschichtung versehen, so dass bei einem Entfernen des Substratträgers 55 von dem Antennensubstrat 16 die in **Fig. 5** dargestellte, die Substratausnehmungen 34, 35 überspannende Anordnung der Anschlusskontakte 25, 26 erhalten bleibt.

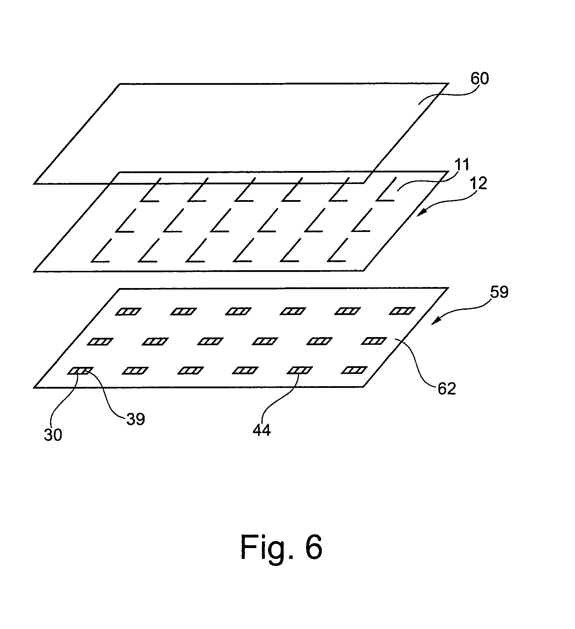

**Fig. 6** soll noch einmal die Reihenfolge der einzelnen Verfahrensschritte verdeutlichen, die beispielsweise zur Herstellung der in **Fig. 4** dargestellten Chipkarte 52 notwendig sind.

Zunächst erfolgt eine Anordnung eines Substratbogens 12 mit einer Mehrzahl in einer Matrixanordnung 13 angeordneten Antennenleiterstrukturen 11 auf einem Chipmodulbogen 59, der eine der Anzahl der Antennenleiterstrukturen 11 entsprechende Mehrzahl von in einem Verbund angeordneten Chipmodulen 61 aufweist. Die Anschlussleiter 38, 39 der einzelnen Chipmodule 61 sind dabei so angeordnet, dass sich die darauf angeordneten Kontakterhöhungen 41 in einer Überdeckungslage mit den Anschlusskontakten 25, 26 der Antennenleiterstrukturen 16 befinden, derart, dass bei einer Anordnung des Substratbogens 12 auf dem Chipmodulbogen 59 die Kontakterhöhungen 41 in die Substratausnehmungen 34, 35 eingreifen. Anschließend kann beispielsweise durch eine Ultraschallbeaufschlagung der Anschlusskontakte 25, 26 von ihrer Oberseite her ein Verschweißen der Anschlusskontakte 25, 26 mit den Kontakterhöhungen 41 der Anschlussleiter 38, 39 erfolgen. Nachfolgend kann ein Decklagenbogen 60 von oben auf den Substratbogen 12 aufgebracht werden, um den Laminataufbau zur Herstellung einer der Matrixanordnung entsprechenden Anzahl von Chipkarten zu komplettieren.

Zur Vereinzelung der einzelnen Chipkarten 52 aus dem solchermaßen hergestellten Chipkartenverbund erfolgt anschließend ein Trenn- bzw. Schneidevorgang entlang den Reihentrennlinien 18 und den Spaltentrennlinien 17 des Substratbogens 12.

## Patentansprüche

1. Antennenanordnung (10) für die Chipkartenherstellung von insbesondere im UHF-Frequenzbereich eingesetzten Chipkarten mit einem Substrat und einer Mehrzahl in einem Beschichtungsverfahren auf dem Substrat ausgebildeten Antennenleiterstrukturen (11) mit einer Anschlussanordnung (24) zum Anschluss der Antennenleiterstrukturen an einen Chip (44),wobei das Substrat als Substratbogen (12) ausgebildet ist, und die Antennenleiterstrukturen in einer eine Mehrzahl von Spalten und Reihen aufweisenden Matrixanordnung (13) auf dem Substratbogen angeordnet sind, wobei die Antennenleiterstrukturen (11) zumindest eine Dipolanordnung (23) aufweisen,
**dadurch gekennzeichnet,**
**dass** die Dipolanordnung (23) einen ersten Antennenstrang (19) und einen zweiten Antennenstrang (20) aufweist, die sich jeweils längs einer Spaltentrennlinie (17) und einer Reihentrennlinie (18) zur Vereinzelung der Antennenleiterstrukturen (11) erstrecken und in einem Kreuzungsbereich (22) der Trennlinien über einen Koppelleiterabschnitt (21) miteinander verbunden sind.

2. Antennenanordnung nach Anspruch 1,
**dadurch gekennzeichnet,**
**dass** die Dipolanordnung aus zumindest einem Drahtleiter gebildet ist.

3. Antennenanordnung nach Anspruch 1,
**dadurch gekennzeichnet,**
**dass** die Anschlussanordnungen (24) zum Anschluss der Antennenleiterstrukturen (11) an den Chip (44) als Schleifendipol ausgebildet sind mit einem Koppelleiterabschnitt, der parallel zu dem Koppelleiterabschnitt (21) der zugeordneten Antennenleiterstruktur angeordnet ist.

4. Antennenanordnung nach einem der vorangehenden Ansprüche,
**dadurch gekennzeichnet,**
**dass** die Anschlussanordnungen (24) zumindest zwei flächig ausgebildete Anschlusskontakte (25, 26) aufweisen, die sich über zu einer Substratrückseite hin offene Substratausnehmungen (34, 35) erstrecken.

5. Antennenanordnung nach Anspruch 4,
**dadurch gekennzeichnet,**
**dass** die Anschlusskontakte (25, 26) einstückig mit den Koppelleiterabschnitten der Anschlussanordnungen (24) als Materialbeschichtung in einem Beschichtungsverfahren auf das Antennensubstrat (16) aufgebracht sind.

6. Antennenanordnung nach Anspruch 5,
**dadurch gekennzeichnet,**
**dass** die Antennenleiterstrukturen (11) und die Anschlussanordnungen (24) aus einer übereinstimmenden Materialbeschichtung gebildet sind.

7. Antennenanordnung nach einem der vorangehenden Ansprüche,
**dadurch gekennzeichnet,**
**dass** die Anschlussanordnungen (24) aus Aluminium oder einer Aluminium enthaltenden Legierung gebildet sind.

8. Antennenanordnung nach einem der Ansprüche 1 bis 6,
**dadurch gekennzeichnet,**
**dass** die Anschlussanordnungen (24) aus Kupfer oder einer Kupfer enthaltenden Legierung gebildet sind.

9. Laminatverbund für die Chipkartenherstellung, umfassend eine Antennenanordnung nach einem der Ansprüche 2 bis 8,
**dadurch gekennzeichnet,**
**dass** die Anschlussanordnungen (24) und die Dipolanordnungen (23) der Antennenleiterstrukturen (11) auf voneinander unabhängigen Substratbögen ausgebildet sind, die zur Herstellung der Antennenleiterstrukturen flächig miteinander verbunden sind.

## Claims

1. An antenna arrangement (10) for the production of chip cards, in particular chip cards used in the UHF frequency range, having a substrate and a plurality of antenna conductor structures (11) formed on the substrate using a coating method, the antenna conductor structures having a terminal arrangement (24) for connecting the antenna conductor structures to a chip (44), wherein the substrate is formed as a substrate sheet (12), and the antenna conductor structures are disposed on the substrate sheet in a matrix arrangement (13) having a plurality of columns and rows, wherein the antenna conductor structures (11) feature at least one dipole arrangement (23),
**characterised in that**
the dipole arrangement (23) features a first antenna strand (19) and a second antenna strand (20), which each extend longitudinally along a column separation line (17) and a row separation line (18) for separating the antenna conductor structures (11), and which are connected with one another in an intersection zone (22) of the separation lines via a coupling conductor section (21).

2. The antenna arrangement according to claim 1,
**characterised in that**
the dipole arrangement is formed of at least one wire conductor.

3. The antenna arrangement according to claim 1,
**characterised in that**
the terminal arrangements (24) for connecting the antenna conductor structures (11) to the chip (44) are formed as a loop dipole having a coupling conductor section which is disposed in parallel to the coupling conductor section (21) of the assigned antenna conductor structure.

4. The antenna arrangement according to any of the preceding claims,
**characterised in that**
the terminal arrangements (24) feature at least two planarly designed terminal contacts (25, 26), which extend over substrate recesses (34, 35) being open towards a substrate rear side.

5. The antenna arrangement according to claim 4,
**characterised in that**
the terminal contacts (25, 26) are applied to the antenna substrate (16) in the form of a material coating using a coating method and are formed integrally with the coupling conductor sections of the terminal arrangements (24).

6. The antenna arrangement according to claim 5,
**characterised in that**
the antenna conductor structures (11) and the terminal arrangements (24) are formed of a congruent material coating.

7. The antenna arrangement according to any of the preceding claims,
**characterised in that**
the terminal arrangements (24) are formed of aluminium or of an alloy containing aluminium.

8. The antenna arrangement according to any of the claims 1 to 6,
**characterised in that**
the terminal arrangements (24) are formed of copper or of an alloy containing copper.

9. A laminate structure for the production of chip cards, comprising an antenna arrangement according to any of the claims 2 to 8,
**characterised in that**
the terminal arrangements (24) and the dipole arrangements (23) of the antenna conductor structures (11) are formed on separate substrate sheets which are planarly connected to one another for the production of the antenna conductor structures.

## Revendications

1. Agencement (10) d'antennes dédié à la fabrication de cartes à puce, en particulier de cartes à puce étant employées sur une plage de fréquences UHF, ayant un substrat et une multiplicité de structures (11) de conducteurs d'antenne étant réalisées sur le substrat dans un procédé de revêtement, ayant un agencement (24) de raccordement destiné au raccordement des structures de conducteurs d'antenne à une puce (44), dans lequel le substrat est réalisé en tant que feuille (12) substrat, et les structures de conducteurs d'antenne sont disposées, dans un agencement (13) de matrice présentant une multiplicité de colonnes et files, sur la feuille substrat, dans lequel les structures (11) de conducteurs d'antenne présentent au moins un agencement (23) dipolaire,
**caractérisé en ce que**
l'agencement (23) dipolaire présente un premier faisceau (19) d'antenne et un deuxième faisceau (20) d'antenne, chacun desdits faisceaux s'étendant le long d'une ligne de démarcation (17) de colonne et d'une ligne de démarcation (18) de file destinées à séparer les structures (11) de conducteurs d'antenne, et lesdits faisceaux étant connectés l'un à l'autre dans une zone (22) de croisement des lignes de démarcation via une partie (21) de conducteur de couplage.

2. Agencement d'antennes selon la revendication 1,
**caractérisé en ce que**
l'agencement dipolaire est formé d'au moins un conducteur filaire.

3. Agencement d'antennes selon la revendication 1,
**caractérisé en ce que**
les agencements (24) de raccordement destinés au raccordement des structures (11) de conducteurs d'antenne à la puce (44) sont réalisés en tant que dipôle boucle, ayant une partie de conducteur de couplage, qui est disposée parallèlement à la partie (21) de conducteur de couplage de la structure de conducteurs d'antenne associée.

4. Agencement d'antennes selon l'une quelconque des revendications précédentes,
**caractérisé en ce que**
les agencements (24) de raccordement présentent au moins deux contacts (25, 26) de raccordement qui sont réalisés de façon plaine, et qui s'étendent sur des évidements (34, 35) de substrat étant ouverts vers une face arrière de substrat.

5. Agencement d'antennes selon la revendication 4,
**caractérisé en ce que**
les contacts (25, 26) de raccordement sont étalés sur le substrat (16) d'antenne, d'une seule pièce avec les parties de conducteur de couplage des agencements (24) de raccordement, comme revêtement de matériau, dans un procédé de revêtement.

6. Agencement d'antennes selon la revendication 5,
**caractérisé en ce que**
les structures (11) de conducteurs d'antenne et les agencements (24) de raccordement sont formés d'un revêtement de matériau concordant.

7. Agencement d'antennes selon l'une quelconque des revendications précédentes,
**caractérisé en ce que**
les agencements (24) de raccordement sont formés d'aluminium ou d'un alliage incluant de l'aluminium.

8. Agencement d'antennes selon l'une quelconque des revendications 1 à 6,
**caractérisé en ce que**
les agencements (24) de raccordement sont formés de cuivre ou d'un alliage incluant du cuivre.

9. Structure laminée dédiée à la fabrication de cartes à puce, comportant un agencement d'antennes selon l'une quelconque des revendications 2 à 8,
**caractérisée en ce que**
les agencements (24) de raccordement et les agencements (23) dipolaires des structures (11) de conducteurs d'antenne sont réalisés sur des feuilles substrat qui sont indépendantes les unes des autres, et qui sont connectées les unes aux autres sur toutes leurs surfaces pour fabriquer les structures de conducteurs d'antenne.
